# EUROPEAN PATENT SPECIFICATION

(11) **EP 1 807 331 B1**
(45) Date of publication and mention of the grant of the patent: **30.12.2009**
(21) Application number: 05797819.9
(22) Date of filing: 25.10.2005
(51) Int. Cl.: B65G 65/44, B65B 37/04

(54) **A DEVICE FOR FEEDING AN INFUSION PRODUCT TO A PACKAGING MACHINE**
VORRICHTUNG ZUR ZUFÜHRUNG EINES AUFGUSSPRODUKTES ZU EINER VERPACKUNGSMASCHINE
DISPOSITIF D'ALIMENTATION D'UNE MACHINE DE CONDITIONNEMENT EN PRODUIT D'INFUSION

(30) Priority: 03.11.2004 IT BO20040680
(43) Date of publication of application: 18.07.2007
(73) Proprietor: IMA FLAVOUR S.r.l., 40064 Ozzano dell'Emilia (BO) (IT)
(72) Inventor: REA, Dario, I-40050 Monterenzio (IT); RIVOLA, Sauro, I-48025 Riolo Terme (IT)
(74) Representative: Lanzoni, Luciano
(86) International application number: PCT/IB2005/003361
(87) International publication number: WO 2006/048762

(56) References cited:
- CH-A- 461 361
- DE-A1- 3 247 564
- GB-A- 552 073
- US-A- 1 371 825
- US-A- 2 094 785
- US-A- 2 161 342
- US-A- 2 819 788
- PATENT ABSTRACTS OF JAPAN vol. 2003, no. 02, 5 February 2003 (2003-02-05) -& JP 2002 306069 A (KAWASAKI KIKO CO LTD), 22 October 2002 (2002-10-22)
- PATENT ABSTRACTS OF JAPAN vol. 2002, no. 04, 4 August 2002 (2002-08-04) -& JP 2001 347185 A (MAGNETEC JAPAN LTD), 18 December 2001 (2001-12-18)
- PATENT ABSTRACTS OF JAPAN vol. 1997, no. 10, 31 October 1997 (1997-10-31) & JP 09 155230 A (YAMAMOTO MFG CO LTD), 17 June 1997 (1997-06-17)

## Description

### Technical Field

This invention relates to a device for feeding an infusion product to a packaging machine.

In particular, this invention can be advantageously used for feeding an infusion product such as tea, coffee, camomile, herbs or the like to an automatic packaging machine for making infusion packets, which the present specification expressly refers to but without restricting the scope of the invention.

### Background Art

Usually, an automatic machine for making infusion packets such as filter bags, sachets, filter-paper pods, etc. comprises a plurality of stations located one after the other along a production line forming part of the automatic machine itself, and including, in particular, a feed station for placing measured quantities of infusion product on a web of filter material used to make the packets.

The feed station as a whole is in turn of known type and is defined by an upright tubular duct, into the open, funnel-shaped top end of which the infusion product is placed, and whose bottom end is connected with conveyor means designed to receive the infusion product from the tubular duct and to feed it to the hopper of a metering device which places measured quantities of the product on a web of filter paper.

At present, the conveyor means most widely used for applications of this kind can be divided broadly into the following two types: a first type, described for example in US patent US 4,628,973, comprises a rotary drum consisting basically of a hollow frustoconical body. The flared top end of the frustoconical body receives the bottom end of the aforementioned tubular duct, whilst the bottom end of the frustoconical body is partly inserted into the hopper of the metering device.

Feed stations equipped with rotary drums of this kind are very effective for feeding the infusion product and have for many years been the most widely used. These feed stations have inherent operating limits, however, particularly at the high speeds at which modern packaging machines now normally operate.

A second type of conveyor means, described for example in European patent application No. EP 1.340.669 A2, comprises an endless conveyor belt trained around a pair of pulleys, mounted under the upright tubular duct and leading into the hopper of the metering device, preferably at an angle to the hopper itself.

This solution has considerable disadvantages, due in particular to the powdery nature of the infusion product fed to the metering device hopper.

Indeed, the infusion product particles tend to adhere to the conveyor pulleys, causing them to jam and eventually leading to conveyor failure and prolonged down time.

Moreover, cleaning the conveyor and conveyor pulleys to remove infusion product particles and dust may be a difficult and laborious task, often requiring the conveyor drive mechanisms and components to be completely dismantled.

Document JP 2002306069 discloses a device for feeding an infusion product (tea leaves) to a steamer, comprising means for collecting and transporting the infusion product and a U-shaped vibrating channel for conveying said infusion product received from the collection means and for feeding it to a steamer, wherein permanent magnet means are provided above the U-shaped vibrating channel to retain metal particles that may be present in the infusion product.

The aim of this invention is to provide an infusion product feeding device that overcomes the disadvantages of the prior art described above.

In particular, it is an aim of the present invention to provide feed device that is at once simple and efficient and that is capable of feeding the infusion product to a packaging machine that operates at high production speeds.

### Disclosure of the invention

The aim of the invention is achieved by the feeding device of claim 1.

### Brief Description of the Drawings

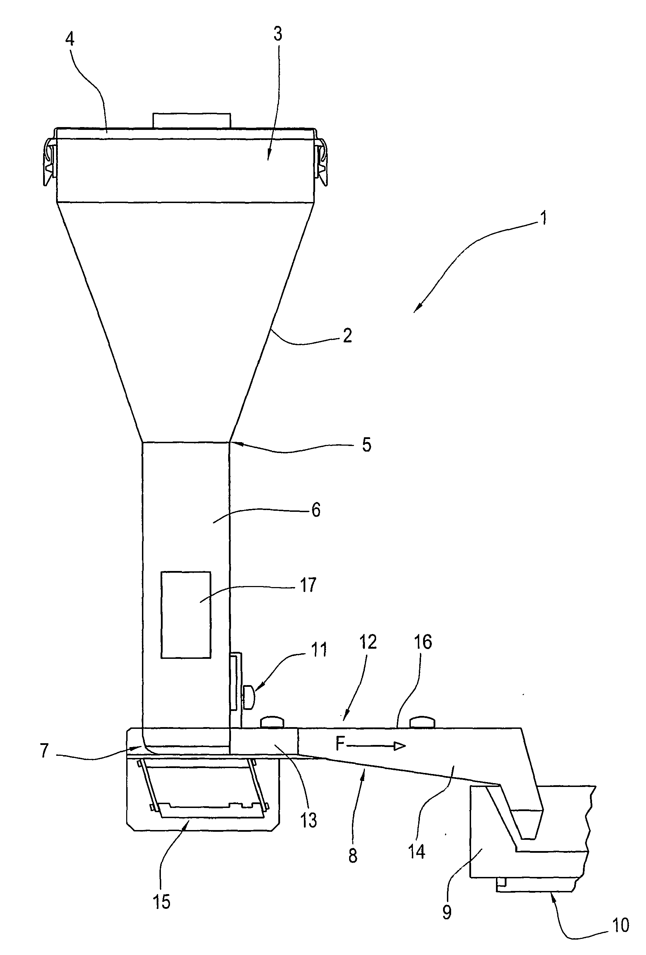

The technical characteristics of the invention, with reference to the above aims, are clearly described in the appended claims and its advantages are apparent from the detailed description which follows, with reference to the accompanying drawing which illustrates a preferred, non restricting embodiment of the invention provided merely by way of example, and which represents a feeding device according to the invention in a front view.

### Detailed Description of the Preferred Embodiments of the Invention

With reference to the accompanying drawing, the numeral 1 denotes in its entirety, a feeding device used for feeding an infusion product (tea, coffee, camomile, etc.) to an automatic packaging machine (of known type and therefore not illustrated) which is designed to make packets (also of known type and not illustrated). More specifically, the device 1 forms an integral part of an operating feed station of the packaging machine itself.

As illustrated in the accompanying drawing, the device 1 comprises a substantially funnel-shaped container 2 having a flared open top end 3 which is fitted with a lid 4 and into which the infusion product is placed, and a bottom end 5 which is connected to a hollow vertical tubular element 6.

The bottom end 7 of the tubular element 6 ends at and gives onto conveying means 8 which are designed to receive the infusion product falling out of the container 2 through the tubular element 6 itself and to feed it (arrow F) to a hopper 9 of a customary metering device 10 forming part of the operating feed station of the packaging machine.

More specifically, the tubular element 6 is equipped with manual adjustment means 11 for adjusting the distance of its bottom end 7 from the conveying means 8 in such a way as to control the quantity of infusion product falling onto the conveying means 8.

With reference to the accompanying drawing, the conveying means 8 comprise a substantially tube-shaped duct 12, a first portion 13 of which is located under the end 7 of the tubular element 6 and a second portion 14 of which is tilted towards the hopper 9 and leads into the hopper 9 itself.

The duct 12, in particular at its first portion 13, is supported by and coupled with vibrating actuating means 15 designed to impart to the duct 12 a vibrating motion of defined amplitude in order to feed the infusion product on the duct 12 itself quickly towards the hopper 9 of the metering device 10.

At the top of it, the duct 12 is preferably equipped with opening/closing elements 16 providing easy access to the inside of the duct 12 for maintenance purposes so as to enable cleaning to be carried out quickly and easily.

Positioned and operating on the tubular element 6 there are permanent magnet means 17 for retaining any metal particles that may be present in the infusion product, thereby preventing such metal particles from advancing along the element 6 and reaching the hopper 9.

During use, the metal particles retained by the means 17 can be removed by staff responsible for the maintenance of the packaging machine.

The invention described can be modified and adapted in several ways without thereby departing from the scope of the invention, which is defined by the appended claims.

## Claims

1. A device (1) for feeding an infusion product, to a packaging machine, said device being of the type comprising means (2, 6) for collecting and transporting the infusion product and means (8) for conveying said infusion product, the conveying means (8) being connected to the collection means (2, 6) to receive the infusion product from the collection means (2, 6) and to feed the infusion product to an operating station (10) of the packaging machine, the conveying means (8) comprising vibrating channelling means (12) comprising a substantially tube-shaped duct (12), whose at least one portion (13) is connected to actuating means (15) designed to impart to the duct (12) itself a vibrating motion of defined amplitude, the means (2,6) for collecting and transporting the infusion product being coupled with permanent magnet means (17) for retaining any metal particles that may be present in the infusion product.

2. The device according to claim 1, **characterised in that** the channelling means (12) are equipped, at the top of them, with opening/closing elements (16) providing access to the inside of the channelling means (12) themselves.

## Patentansprüche

1. Vorrichtung (1) zur Zuführung eines Aufgussproduktes zu einer Verpackungsmaschine, wobei die Vorrichtung von der Art ist, die Einrichtungen (2, 6) zum Sammeln und Transportieren des Aufgussproduktes und Einrichtungen (8) zum Befördern des Aufgussproduktes beinhaltet, wobei die Fördereinrichtungen (8) mit den Sammeleinrichtungen (2, 6) verbunden sind, um das Aufgussprodukt von den Sammeleinrichtungen (2, 6) zu empfangen und das Aufgussprodukt einer Arbeitsstation (10) der Verpackungsmaschine zuzuführen, wobei die Fördereinrichtungen (8) vibrierende Kanalisiereinrichtungen (12) beinhalten, die eine im Wesentlichen rohrförmige Leitung (12) aufweisen, von der zumindest ein Abschnitt (13) mit Betätigungseinrichtungen (15) verbunden ist, die dazu dienen, die Leitung (12) in eine vibrierende Bewegung festgelegter Amplitude zu versetzen, wobei die Mittel (2, 6) zum Sammeln und Transportieren des Aufgussproduktes mit Permanentmagneteinrichtungen (17) zum Zurückhalten von eventuell in dem Aufgussprodukt enthaltenen Metallteilchen gekoppelt sind.

2. Vorrichtung nach Anspruch 1, **dadurch gekennzeichnet, dass** die Kanalisiereinrichtungen (12) an ihrer Oberseite mit Öffnungs-/Schließelementen (16) ausgestattet sind, die einen Zugang zu dem Inneren der Kanalisiereinrichtungen (12) bereitstellen.

## Revendications

1. Un dispositif (1) pour alimenter un produit d'infusion à une machine de conditionnement, ledit dispositif étant du type comprenant des moyens (2, 6) pour collecter et transporter le produit d'infusion et des moyens (8) pour acheminer ledit produit d'infusion, les moyens d'acheminement (8) étant reliés aux moyens de collecte (2, 6) afin de recevoir le produit d'infusion de ces mêmes moyens de collecte (2, 6) et d'alimenter ledit produit d'infusion à une station opérationnelle (10) de la machine de conditionnement, les moyens d'acheminement (8) comprenant des moyens (12) de canalisation vibrante qui comprennent un conduit (12) essentiellement en forme de tube dont au moins un tronçon (13) est relié à des moyens d'actionnement (15) destinés à imprimer au conduit (12) lui-même un mouvement de vibration d'amplitude définie, les moyens (2, 6) de collecte et de transport du produit d'infusion étant accouplés avec des moyens à aimant permanent (17) destinés à retenir les particules métalliques éventuellement présentes dans le produit d'infusion.

2. Le dispositif selon la revendication 1, **caractérisé en ce que** les moyens de canalisation (12) sont équipés, supérieurement, d'éléments d'ouverture/fermeture (16) permettant d'accéder à l'intérieur des moyens de canalisation (12) eux-mêmes.
